# EUROPEAN PATENT APPLICATION

(11) **EP 2 785 020 A1**
(43) Date of publication of application: **01.10.2014**
(21) Application number: 13161833.2
(22) Date of filing: 29.03.2013
(51) Int. Cl.: H04L 29/12

(54) **Method and system for distributing location-based addresses in a network**

(71) Applicant: Televic Rail NV, 8870 Izegem (BE)
(72) Inventor: Lambrecht, Jürgen, 8200 Sint-Andries (BE)
(74) Representative: Van Bladel, Marc

(57) **Abstract**

The present invention relates to a method for assigning with a controller node a location-based network address to a non-initialised client node, said controller node and said non-initialised client node belonging to a plurality of nodes in a mesh network, said mesh network being provided with a network layer dedicated for initialisation purposes, said non-initialised node having network ports configured so as to form an end point for network initialisation information concerning network addressing received from the controller node via the dedicated network layer and configured to pass network traffic different from the network initialisation information. The method comprises the steps of :
- assigning the location based network address to the non-initialised node, thereby bringing the node in initialised state,
- adapting the configuration of the network ports, so that later network initialisation information can pass bidirectionally the node in initialised state.

## Description

### Field of the invention

The present invention is generally related to the field of techniques for distributing with a server device network addresses to a group of client devices connected in a mesh.

### Background of the invention

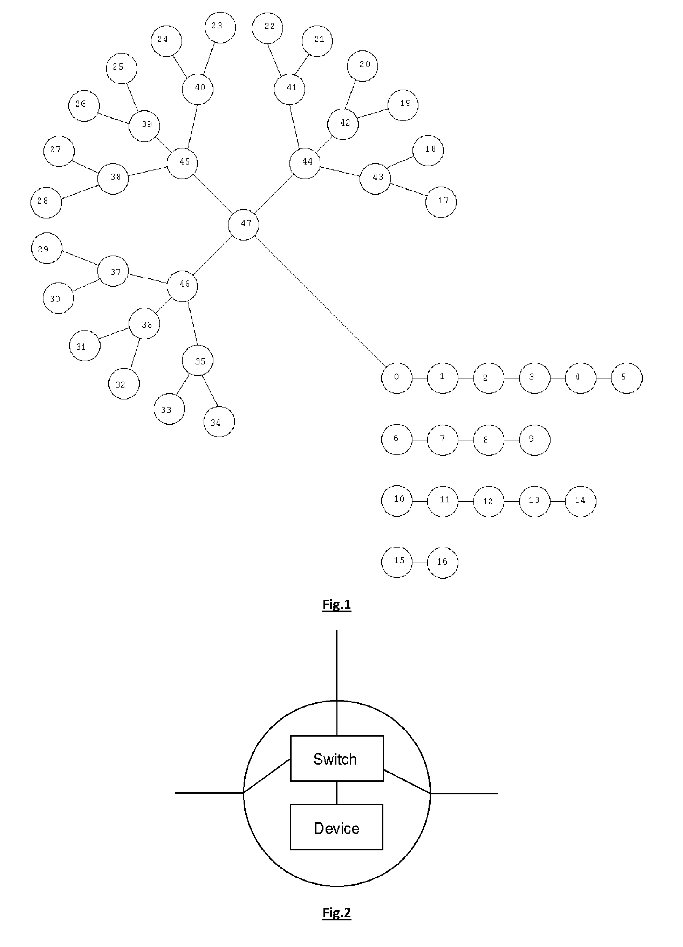

A communication network is considered composed of nodes and links (vertices and edges in graph theory), as illustrated in Fig.1. In communication networks a node is a connection point, either a redistribution point or a communication endpoint (i.e. some terminal equipment). A node can be a server or a client device, it can act as a master or a slave or it can have some controlling function. A port is a point of the node where edges are attached.

Each node contains a device to distribute network traffic between the ports of the node. In a so-called 'active node' the device (that can take the form of a central processing unit (CPU), a micro-controller, a digital signal processor (DSP), a field programmable gate array (FPGA), ...) needs a network address to be able to communicate with it. A so-called 'passive node' has no network address and it is not possible to communicate over the network with it.

Nodes in a network are identified by their address. Active nodes without an address are called non-initialized nodes.

In some cases it is necessary to know the physical location of nodes when the communication is not only node specific, but also location specific.

In computer networking a single layer-2 network may be partitioned to create multiple distinct broadcast domains, which are mutually isolated so that packets can only pass between domains via routers. Such a domain is referred to as a Virtual Local Area Network, Virtual LAN or VLAN.

One type of computer network considered here is the Ethernet/IP network type. A redistribution point then comprises at least an Ethernet Layer-2 switch to distribute the network traffic. An active node contains at least a 3-port Ethernet Layer-2 switch to connect its links. In Fig.2 the embedded control unit is via an embedded link also connected to the switch.

The protocol most commonly used today in configuring VLANs is IEEE 802.1Q. Here, a 4-byte tag is added to the Ethernet packets that contains an ID and a priority level.

Information on the network topology is commonly obtained via the *Link Layer Discovery Protocol* (LLDP), as defined in IEEE 802.1AB. In case the layout is fixed, this info can also be derived from a plan of the physical network.

IP addresses are typically distributed via the dynamic host configuration protocol (DHCP) by a DHCP server. A common solution to couple an IP address with the location is to use device specific information as the MAC address and network topology information containing for each node the MAC address. However, to implement such solution a manual intervention is needed for each installation and for each repair (i.e. device replacement) because the MAC address must be coupled with the location in a database used by the DHCP server.

In the art also automatic solutions exist to couple the IP address with the location. For example, *Media Endpoint Discovery* is an enhancement of LLDP, known as LLDP-MED (ANSI/TIA-1057), that provides amongst other things device location discovery. Another solution is DHCP Option 82, which provides a mechanism for generating IP addresses based on the location the client device is in the network.

However, all these automatic solutions suffer from the drawback that they need a processor to run a software algorithm and a full TCP/IP stack at the client devices. A hardware solution is not possible.

Hence, there is a need for a simple mechanism to distribute network addresses to uninitialized network nodes based on the node location. Further a mechanism simple enough to implement in hardware is desirable, whereby the network of already initialized nodes is not disturbed and whereby, for ease of installation and maintenance, device specific information is not be used to determine the node location.

### Summary of the invention

It is an object of embodiments of the present invention to provide for a method for a controller node to distribute network addresses to non-initialized nodes, based on the location of the node, whereby the use of device specific information is avoided, the method being simple enough to be implemented in hardware, whereby the network of already initialized network nodes is not disturbed.

The above objective is accomplished by the solution according to the present invention.

In a first aspect the invention relates to a method for assigning with a controller node a location-based network address to a non-initialised node. The controller node and the non-initialised node belong to a plurality of nodes in a mesh network. The mesh network is provided with a network layer dedicated for initialisation purposes. The non-initialised node has network ports configured so as to form an end point for network initialisation information concerning network addressing received from the controller node via the dedicated network layer and configured to pass network traffic different from the network initialisation information. The method comprises the steps of :
- assigning the location based network address to the non-initialised node, thereby bringing the node in initialised state,
- adapting the configuration of the network ports, so that later network initialisation information can pass bidirectionally the node in initialised state.

With the above approach the aim of presenting a simple mechanism for distributing location-based network addresses is indeed achieved. As the ports of the non-initialised nodes can be so configured that they form an end point for information related to the distribution of network addresses and that they let pass other traffic, one can make sure that there is each time only one node available in the network to which the network address contained in the network initialisation information can be assigned. Once the node has obtained a network address, it moves from non-initialised to initialised state and the network port configuration is adapted so that network information for initialising network nodes farther away from the controller node from then on can pass the node that has just been initialised. This way, by initializing the nodes one by one, the relative location of each node is known.

In a preferred embodiment the method steps are performed repeatedly for a plurality of non-initialised nodes belonging to said plurality of network nodes.

In an advantageous embodiment more than one node of the plurality of nodes acts as controller node. In that case the nodes preferably make use of more than one dedicated network control layer.

In a preferred embodiment the network initialisation information comprises identification tags indicating said dedicated network layer.

In another embodiment the mesh network is a part of a bigger network comprising a plurality of mesh networks.

Advantageously, the mesh network is an Ethernet network and the dedicated network layer applies IEEE 802.1Q VLAN tags.

In a preferred embodiment information on the relative position of the node in initialised state coupled with the location based network address is combined with a map of the mesh network, so that information on the absolute position of said node is obtained.

In another aspect the invention relates to a system comprising a plurality of nodes configured in a mesh network, said mesh network being provided with a network layer dedicated for initialisation purposes, wherein at least one node of said plurality is arranged to act as a controller node and to distribute location-based network addresses. The plurality of nodes further comprises at least one non-initialised client node arranged to have network ports configured to form an end point for network initialisation information concerning network addressing received from the controller node via the dedicated network layer and configured to pass network traffic different from said network initialisation information, wherein the controller node is arranged for assigning the location based network address to the non-initialised node, thereby bringing said node in initialised state, and for adapting the configuration of the network ports, so that subsequent network initialisation information can pass bidirectionally said node in initialised state.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 illustrates a mesh network.

Fig.2 illustrates a node with an intelligent device inside connected to a switching device.

Fig.3 illustrates a network node comprising a switching device adapted to route traffic.

Fig.4 up to Fig.13 are a part of Fig. 1 and illustrate step-by-step the method according to the invention.

Fig.14 illustrates an embedded device connected to an Ethernet switch with an implementation of the method according to the invention using IEEE 802.1Q VLANs.

Fig.15 represents the mesh network of Fig.1, wherein a part of the network is treated as a black box, or where the devices inside the black box are passive nodes that do not need a network address.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In order to apply the present invention a wide variety of possible network implementations is available. Any network configuration that meets the following constraints is suitable for implementing the invention. First, it must be possible to virtually divide the network in at least two separate layers. One of these layers is referred to below as 'virtual control layer'. It is a layer with a specific, dedicated task, namely the initialisation of network nodes with a location based network address. Further, it must be possible to adapt the nodes of the network for enabling/disabling the receive and transmit parts of a node port on a virtual control layer. An active node can be addressed over the network to adapt node ports, but a passive node needs a direct intervention to adapt its node ports. A passive node that cannot adapt its node ports should have only two ports (e.g. a repeater). The network can have any topology, a mesh being the most general one. The plurality of nodes in the network is basically split in two categories for the invention. At least one node is taken to act as controller node. The controller node can be any node in the mesh network. The other category comprises all other nodes, hence all nodes not acting as controller. Those nodes, or at least a part of them, need to be assigned a network address.

The controller node, also called 'controller' or 'server' sends initialization data over a virtual control layer in the network to the non-initialized nodes or 'clients'. Normal data, i.e. data not related to address assignment, uses the default layer in the network.

The non-initialized nodes have their ports so configured that they prevent initialization data from passing through, but let all other data pass. This way, already initialized nodes farther in the network can operate normally.

When the method is for the first time applied to the network in question, nodes normally start in a non-initialised state (leaving aside nodes possibly having a hard coded network address). Then a step is performed of assigning a network address to the first non-initialized node, i.e. the node closest to the controller node in relative distance. Note that such initialisation information transmitted by the controller node can reach this first node (called 'the first hop' in the art) and only this first node. Due to the actual port configuration at that moment it is impossible to forward the network initialisation information deeper into the network. Next, two network ports (a port 2-tuple) of the non-initialised node are activated over that control network to allow bidirectional network initialization traffic to the next node (at the second hop), thereby still prohibiting traffic on other port 2-tuples to non-initialised nodes.
Performing these two steps brings the node in initialised state. The two steps are then repeated for the next non-initialized node in the network.

By initializing the nodes in a logical order, starting from the node closest to the controller node, the relative position of the nodes can be established. When combined with a map of the system this results in their actual physical location.

The proposed solution does not use a complex algorithm at the network nodes that need initialisation. The solution can for example be implemented with an FPGA attached to an Ethernet switch. Alternatively, the proposed solution can also be implemented using a small micro-controller running a small, possibly embedded, TCP/IP stack with DHCP (which is standard practice in all embedded operating systems) for the address assignment, and a standard Ethernet switch for the localisation.

The proposed solution makes Safety Integrity Level 2 (SIL2) certification possible because it is simple enough to be implemented without a micro-controller running a TCP/IP stack which is very difficult to certificate.

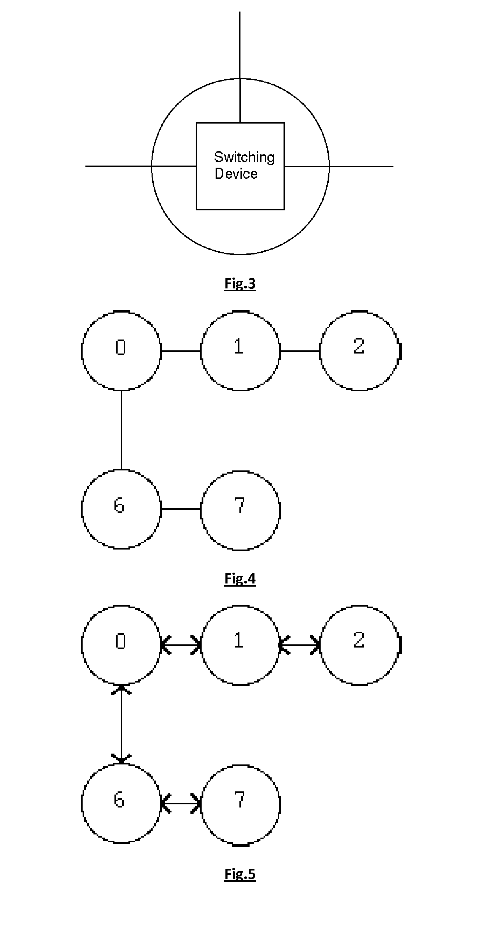

One advantageous option is an Ethernet/IP network. However, in one embodiment of the invention the network can be an RS485 network where each node is a device that routes all traffic, as illustrated in Fig.3. The initialisation data are distinguishable from all other data, e.g. by a special reserved address and this special reserved address creates the virtual control layer. A non-initialized node does not route initialization data (i.e. does not let it pass through), but all other data is routed as normal. This way only the non-initialised node directly connected to the controller, or connected via previously initialized nodes can receive the initialization data.

### Example

The method generally works by activating the receive and transmit part of the ports separately for initialization data. Normal (i.e. non-initialisation) data can pass all ports in all directions (as defined by the network administrator). To explain the method, a small part of Fig.1 will be used in the next paragraphs. This small part is repeated as Fig.4.

The initialisation protocol is not relevant here. A so called 'master-server' can take the initiative by broadcasting an "init request". Alternatively, the client can broadcast such an 'init request' (as in Ethernet/IP DHCP) to a so called 'slave-server'.

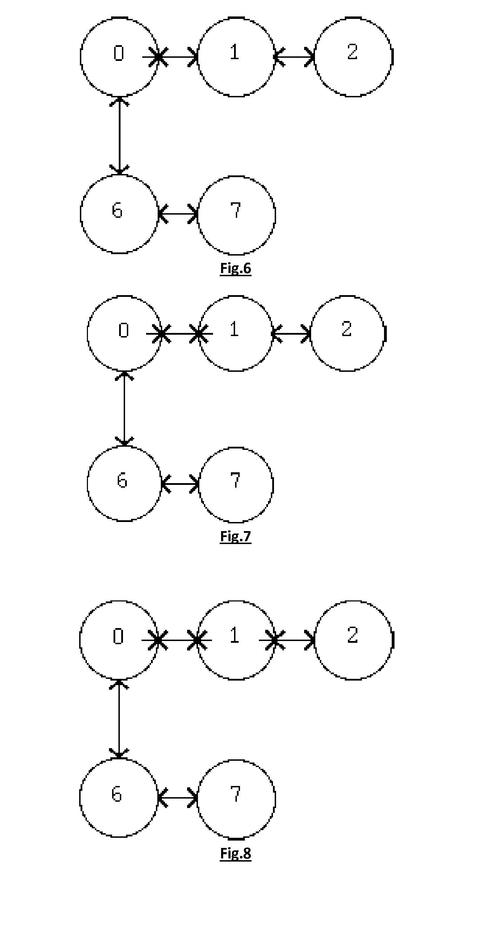

During the initialisation process, i.e. when at least one node has not received an address yet, the non-initialised redistribution point nodes (clients and server) configure their ports such that initialization data can only enter the node. See the arrows in Fig.5 representing the flow of initialization data. In case of a master-server, to initialize a client, the server node (node 0 in Fig. 5) selects one of its ports (in case it has multiple ports) and activates it to be able to send out initialization data, see the arrow inside the node in Fig.6 to node 1. In case of a slave-server, all client nodes send out an initialization request and the server selects one of its ports and activates it to be able to transmit, identical to the master-server case. For further explaining the invention below the master-server case is considered.

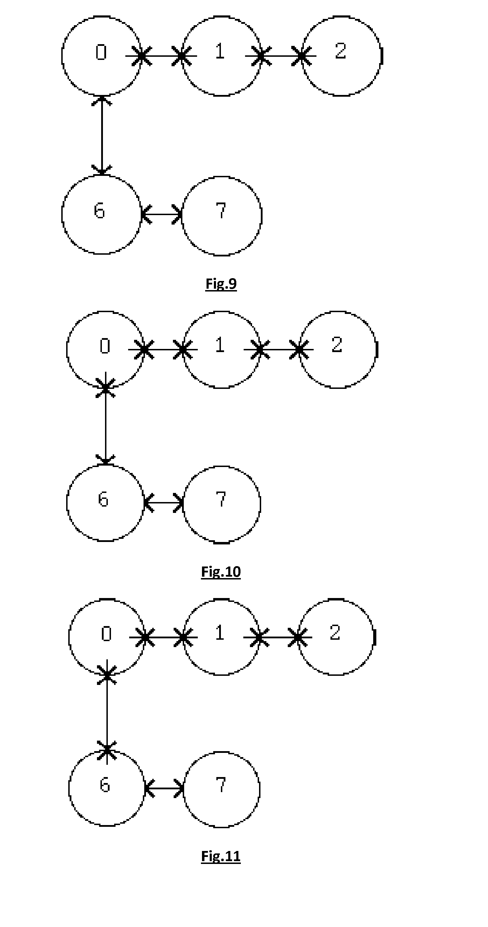

So the server can only initialize (i.e. attribute an address to) the physically first non-initialised redistribution point client, such that the server knows the physical location of that redistribution point client, node 1 in Fig.6. Once node 1 in Fig.6 has received an address, the server can communicate with it and the server activates (or lets the node activate itself) two ports of node 1 for transmitting initialization data : the port connected to the server (Fig.7) and another port (Fig.8) (also for the general case where the node has more than two ports). Now initialization data can reach node 2. That node 2 is the next one to be initialized and have its ports activated (Fig.9). Node 2 is a communication endpoint client, so the end of that chain from the controller is reached. Now the controller selects another one of its ports to activate in order to be able to send out initialization data, see in Fig.10 the arrow inside node 0 towards node 6. In the same way nodes 6 and 7 are also initialized (Figs 11, 12 and 13).

There are several ways to detect nodes that crash or reboot, or to detect newly added nodes (to be able to initialize them). The server can keep a list of already initialized clients and check regularly whether they are alive. The master-server can transmit regularly alive requests (and wait for acknowledgements) - the slave-server just has to wait for status update messages from the clients.

To find the absolute position, a database is needed that links the relative position with the absolute position. The database can also contain extra information of the localized device (e.g. colour, size ...).

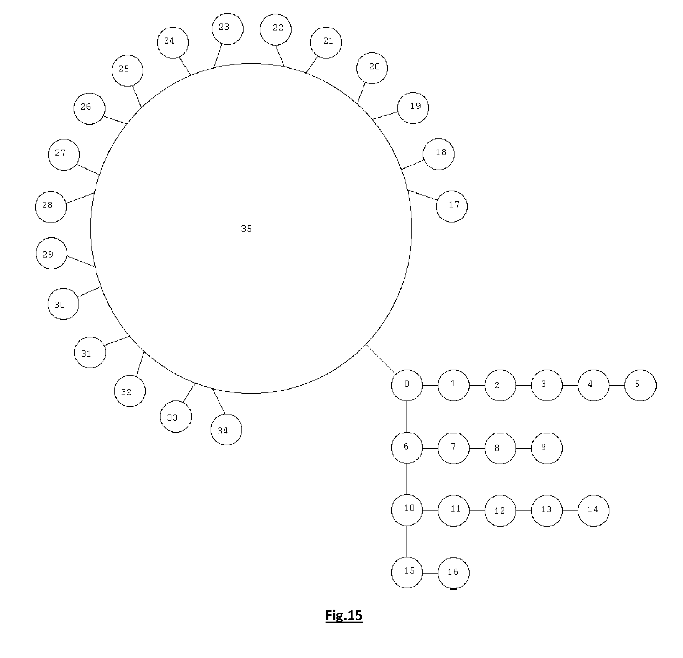

The network can also contain hierarchy: if in Fig.1 nodes 35 to 47 would be passive nodes or active nodes that already are initialized (in one way or another), then the network of Fig.1 can be simplified to Fig.15 : during initialization of nodes 17 to 34, the server activates (for transmission of initialization data) one by one the ports where those communication endpoint clients are connected to the server, and then initializes that communication endpoint client based on its location, see Fig.15 for client 35.

### Example for Ethernet

In an Ethernet/IP based solution according to the present invention, the switch embedded in a redistribution point is a so-called "managed switch": it must be possible to configure (IEEE802.1Q) Virtual Local Area Networks (VLANs) on the switch. In the simplest case the managed switch is embedded in the network node just to daisy chain the network nodes (see Fig.1 nodes 1 to 5 for a daisy chain example), in the most complex case the client is actually a switch/router that also needs an IP address (see Fig.15, node 35).

At initialization the non-initialised redistribution point clients configure their own switch (see Fig. 2) such that only the embedded link between switch and device is member of the initialization VLAN with index *i* (hereby called VLAN ID *i,* VIDi). This way the initialization packets of the server node, broadcast packets tagged with VIDi, will not be further switched to other clients and only reach the local client. So the server can only initialize (i.e. attribute an IP address to) the physically first non-initialized redistribution point client, such that the master knows the physical location of the redistribution point client to be initialized. If communication endpoint clients (not containing an embedded switch) are connected to that redistribution point client, the server enables one by one VIDi on the port the communication endpoint client is connected to the redistribution point client, and then initializes that communication endpoint client based on its location.

Normal traffic (i.e. non-initialization traffic) uses another VLAN with index *j* (hereby called VLAN ID *j*, VIDj). All ports of all clients are normally (as defined by the network administrator) member of VIDj. For normal traffic, all nodes use VIDj tagged packets, or have their switch configured to add VIDj tags by default to untagged packets such that normal traffic can pass as intended in that network.

Also when clients want to communicate with the server during the initialization, they use VIDj. They could also use VIDi tagged packets, but then the device must be able to add VLAN headers to its packets, which is mostly not the case for small embedded devices. Only the server must be able to do that.

When at run-time a client reboots, when a new client is added to the network or when a faulty client has been replaced, that client initializes its embedded switch as set out above. Normal ViDj tagged traffic can pass that non-initialized client, ViDi tagged packets will not pass and only reach the embedded device of the client (still referring to Fig.2). The server sends at regular intervals initialization broadcast messages tagged with ViDi, to which only non-initialized clients respond. This way the (re)booted client can be initialized. In order to know the client's relative position the server could have kept a list of MAC addresses built at initialization time, but this will not work when a client has been replaced. If all clients send at regular intervals alive messages to the server, the server can know which client has (re)booted and assign the correct IP address according to the client's relative position in the network. When a new client has been added to the network, the server must be aware of that possibility. The server must adapt its map of the network, and assign a new IP address in agreement with the client's position.

### Practical example for an Ethernet/IP daisy chain

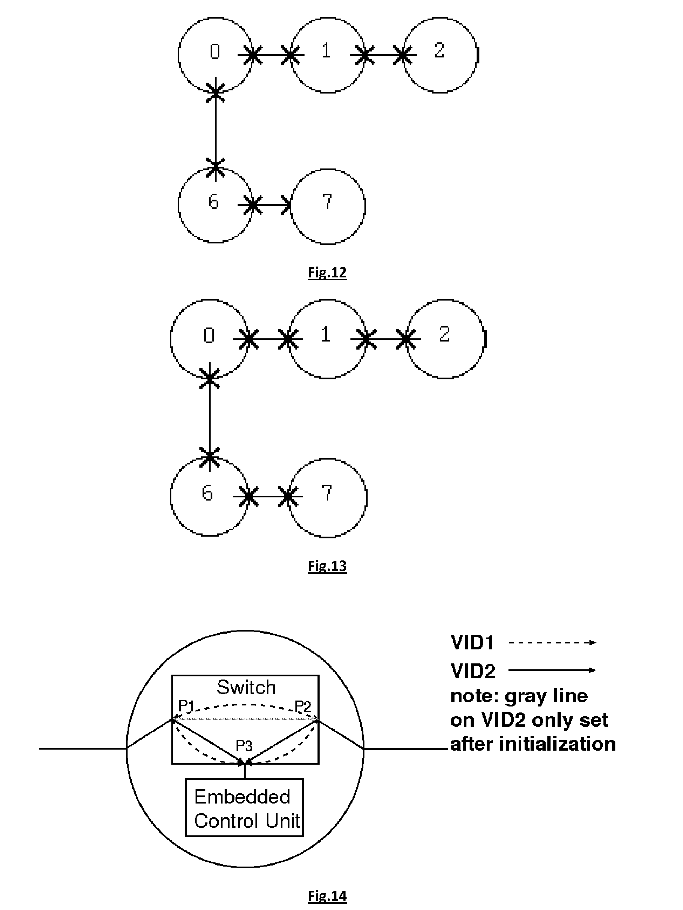

In a practical example the method is used to initialize clients in a daisy chain. P1 and P2 are external ports used in the daisy chain (see Fig. 14), P3 is connected internally to the client's control unit; ViDi is there VID2, VID1 is the default VLAN for normal traffic (i.e. traffic not related to initialisation).

### Initialisation

For initialization purposes a separate 802.1Q VLAN ID (VID) 2 is chosen.
- P1 and P2 mark (but not force) ingress packets with VID2 (this is a virtual tag, not yet a physical VLAN)
- P3 uses the default VID1 tag at ingress (packets from control unit).
- Only the control unit P3 will be a (egress) member of this VID2.
- All ports have 802.1Q enabled (secure)
- All ports (P1,2,3) will be member of VID1 (default VLAN).
- Ports (P1,2) will egress tagged.
- P3 egresses untagged (the embedded control unit itself does not need to take care of VLAN tags)
This means that all untagged or (VID2 tagged) packets ingressing a client receive VID2 and are sent only to the client's embedded control unit. VID1 tagged packets can pass all ports.
Packets sent by the embedded control unit during the initialiazation process are unicast packets to the server, and can use VID1.
The server can transmit untagged packets or VID2 tagged packets to reach only the first client. The server can transmit packets tagged with VID1 to travel over the chain. If the server cannot add VLAN tags itself, it configures its own embedded switch to add VID2 tags to packets egressing the server during initialization time, and to add VID1 tags after initialization.

### Normal traffic

When a device is initialized the 802.1Q VLAN settings of the switch are adapted : all ports will become member of VID2.
- P3 ingressing (control unit) packets are marked with VID1 and egress P1/2 tagged;
- tagged P1/2 ingressing packets keep their VLAN and
   ○ only VID=1,2 packets can egress all other ports,
   ○ packets with another VID are discarded;
- untagged P1/2 ingressing packets are marked with VID2 and can egress P3 untagged and P2/1 tagged with VID2.
So the next device in the daisy chain can be addressed. The VLAN settings also allow a minimal intervention of the embedded control unit. It only needs to configure the switch. The routing is handled by the switch.
Thanks to the default VID1, a client performing a reset does not interrupt the normal Ethernet communication (between Server and the client further on) because that runs on VID1.
If the server wants to reach all devices, it should use VID1, if it wants to reach the first non-initialized device, it should use VID2 or use untagged packets.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for assigning with a controller node a location-based network address to a non-initialised node, said controller node and said non-initialised node belonging to a plurality of nodes in a mesh network, said mesh network being provided with a network layer dedicated for initialisation purposes, said non-initialised node having network ports configured so as to form an end point for network initialisation information concerning network addressing received from said controller node via said dedicated network layer and configured to pass network traffic different from said network initialisation information, the method comprising the steps of :
- assigning said location based network address to said non-initialised node, thereby bringing said node in initialised state,
- adapting the configuration of said network ports, so that later network initialisation information can pass bidirectionally said node in initialised state.

2. Method for assigning as in claim 1, wherein the method steps are performed repeatedly for a plurality of non-initialised nodes belonging to said plurality of nodes.

3. Method for assigning as in any of the previous claims, wherein more than one node of said plurality of nodes acts as controller node.

4. Method for assigning as in claim 3, wherein said more than one node use more than one dedicated network layer.

5. Method for assigning as in any of claims 1 to 4, wherein said network initialisation information comprises identification tags indicating said dedicated network layer.

6. Method for assigning as in any of the previous claims, wherein said mesh network is a part of a bigger network comprising a plurality of mesh networks.

7. Method for assigning as in any of the previous claims, wherein information on the relative position of said node in initialised state is coupled with said location based network address is combined with a map of said mesh network, so that information on the absolute position of said node in initialised state is obtained.

8. Method for assigning as in any of the previous claims, wherein said mesh network is an Ethernet network and said dedicated network layer applies IEEE 802.1Q VLAN tags.

9. System comprising a plurality of nodes in a mesh network, said mesh network being provided with a network layer dedicated for initialisation purposes, wherein at least one node of said plurality is arranged to act as a controller node and to distribute location-based network addresses and wherein said plurality of nodes further comprises at least one non-initialised client node arranged to have network ports configured to form an end point for network initialisation information concerning network addressing received from said controller node via said dedicated network layer and configured to pass network traffic different from said network initialisation information, wherein said controller node is arranged for assigning said location based network address to said non-initialised node, thereby bringing said node in initialised state, and for adapting the configuration of said network ports, so that later network initialisation information can pass bidirectionally said node in initialised state.
